# EUROPEAN PATENT APPLICATION

(11) **EP 4 401 506 A1**
(43) Date of publication of application: **17.07.2024**
(21) Application number: 22867226.7
(22) Date of filing: 26.08.2022
(51) Int. Cl.: H04W 76/34, H04W 28/06, H04W 76/20, H04W 84/12

(54) **COMMUNICATION DEVICE, COMMUNICATION METHOD, AND PROGRAM**

(30) Priority: 08.09.2021 JP 2021146411
(71) Applicant: CANON KABUSHIKI KAISHA, Tokyo 146-8501 (JP)
(72) Inventor: YOSHIKAWA Yuki, Tokyo 146-8501 (JP)
(74) Representative: Canon Europe Limited
(86) International application number: PCT/JP2022/032164
(87) International publication number: WO 2023/037904

(57) **Abstract**

In disconnecting the connection via a second link in a state where a communication apparatus and another communication apparatus are connected via a first link and a second link, TID assignment to the first link is performed based on information about a TID set to the first link and information about a TID set to the second link by the setting unit.

## Description

### Technical Field

The present invention relates to a communication apparatus that performs wireless communication.

### Background Art

As the amount of data to be communicated increases in recent years, communication techniques such as those in a wireless local area network (LAN) are being developed. The Institute of Electrical and Electronics Engineers (IEEE) 802.11 standard series has been known as major wireless LAN communication standards. The IEEE 802.11 standard series includes standards such as IEEE 802.11a/b/g/n/ac/ax. For example, the latest standard IEEE 802.11ax standardizes a technique for improving communication speed under congested conditions, in addition to a high peak throughput of up to 9.6 Gbit/sec (Gbps), using orthogonal frequency-division multiple access (OFDMA) (see Patent Literature 1). OFDMA is an abbreviation for orthogonal frequency-division multiple access.

A task group called IEEE 802.11be has been launched as a successor standard aiming to improve throughput, frequency use efficiency, and communication latency.

IEEE 802.11be is discussing multi-link communication where an access point (AP) constructs a plurality of links with a station (STA) in frequency bands such as 2.4-, 5-, and 6-GHz bands and performs simultaneous communication.

### Citation List

### Patent Literature

PTL 1: Japanese Patent Laid-Open No. 2018-50133

### Summary of Invention

### Technical Problem

In the multi-link communication under discussion for implementation by 1 1be, identifiers indicating the degrees of priority of data, or traffic identifiers (TIDs), are discussed to be assigned to each link established. TID is an abbreviation for traffic identifier. There are a total of eight types of TIDs. All the TIDs need to be set to at least one of the links established in the multi-link communication.

However, if a communication apparatus and another communication apparatus are connected via a first link and a second link and there is a TID assigned to only the second link, a disconnection of the second link may interrupt the communication.

The present invention is directed to appropriately continuing communication after a predetermined link is disconnected in multi-link communication where a plurality of links is established for communication.

### Solution to Problem

To achieve the foregoing, a communication apparatus according to the present invention includes an establishment unit configured to establish connections with another communication apparatus via a first link and a second link, a setting unit configured to set traffic identifiers (TIDs) to the first link and the second link, and an assignment unit configured to, in disconnecting the connection via the second link in a state where the communication apparatus and the another communication apparatus are connected via the first link and the second link by the establishment unit, perform TID assignment to the first link based on information about the TID set to the first link and information about the TID set to the second link by the setting unit.

### Advantageous Effects of Invention

According to the present invention, communication can be appropriately continued after a predetermined link is disconnected in multi-link communication where a plurality of links is established for communication.

### Brief Description of Drawings

[Fig. 1] Fig. 1 is a diagram illustrating a configuration of a network according to the present invention.
[Fig. 2] Fig. 2 is a diagram illustrating a hardware configuration of a communication apparatus according to the present invention.
[Fig. 3] Fig. 3 is a diagram illustrating a functional configuration of the communication apparatus according to the present invention.
[Fig. 4] Fig. 4 is a diagram illustrating an outline of multi-link communication.
[Fig. 5] Fig. 5 is a diagram illustrating an example of the frame format of a traffic identifier (TID)-To-Link Mapping Element.
[Fig. 6A] Fig. 6A is a diagram illustrating an example of an action frame format according to the present exemplary embodiment.
[Fig. 6B] Fig. 6B is a diagram illustrating an example of an action frame format according to the present exemplary embodiment.
[Fig. 7A] Fig. 7A is a diagram illustrating an example of an action frame format according to the present exemplary embodiment.
[Fig. 7B] Fig. 7B is a diagram illustrating an example of an action frame format according to the present exemplary embodiment.
[Fig. 7C] Fig. 7C is a diagram illustrating an example of an action frame format according to the present exemplary embodiment.
[Fig. 7D] Fig. 7D is a diagram illustrating an example of an action frame format according to the present exemplary embodiment.
[Fig. 8] Fig. 8 is a diagram illustrating an example of the frame format of a Multi-Link Mapping Element.
[Fig. 9] Fig. 9 is a table illustrating Extremely High Throughput (EHT) Action Values according to the present exemplary embodiment.
[Fig. 10] Fig. 10 is a sequence diagram illustrating TID reassignment processing in disconnecting a link according to the present exemplary embodiment.
[Fig. 11] Fig. 11 is a flowchart for performing the TID reassignment processing in disconnecting a link according to the present exemplary embodiment.
[Fig. 12] Fig. 12 is a sequence diagram illustrating TID reassignment processing in disconnecting a link according to the present exemplary embodiment.
[Fig. 13] Fig. 13 is a flowchart for performing the TID reassignment processing in disconnecting a link according to the present exemplary embodiment.
[Fig. 14] Fig. 14 is a flowchart for performing the TID reassignment processing in disconnecting a link according to the present exemplary embodiment.

### Description of Embodiments

Exemplary embodiments of the present invention will be described in detail below with reference to the attached drawings. Configurations described in the following exemplary embodiments are just examples, and the present invention is not limited to the illustrated configurations.

### (Configuration of Wireless Communication System)

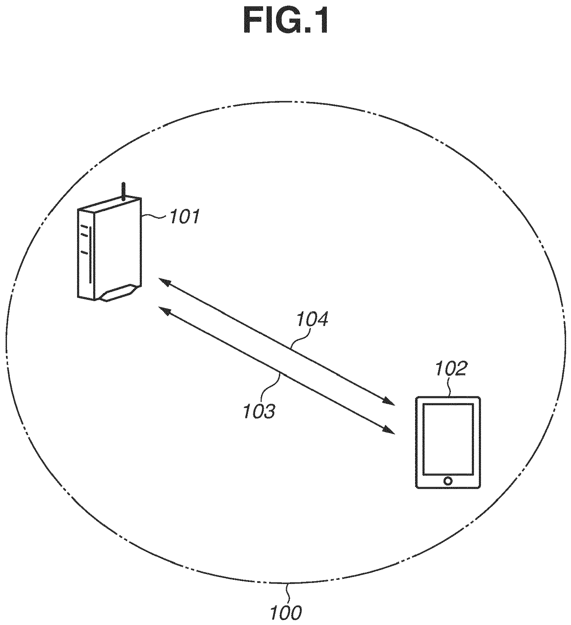

Fig. 1 illustrates a configuration of a network where a communication apparatus 101 (hereinafter, a non-access point [non-AP] multi-link device [MLD] 101) according to the present exemplary embodiment searches. A communication apparatus 102 (hereinafter, an access point [AP] MLD 102) is an AP having the role of constructing a wireless network 100. The AP MLD 102 can communicate with the non-AP MLD 101. The present exemplary embodiment applies to the non-AP MLD 101 and the AP MLD 102.

The non-AP MLD 101 and the AP MLD 102 can each perform wireless communication compliant with the Institute of Electrical and Electronics Engineers (IEEE) 802.11be (Extremely High Throughput [EHT]) standard. IEEE is an abbreviation for the Institute of Electrical and Electronics Engineers. The non-AP MLD 101 and the AP MLD 102 can communicate at frequencies of 2.4-Hz, 5-GHz, and 6-GHz bands. The frequency bands for the communication apparatuses to use are not limited thereto. Other frequency bands, such as a 60-GHz band, may be used. The non-AP MLD 101 and the AP MLD 102 can communicate using bandwidths of 20 MHz, 40 MHz, 80 MHz, 160 MHz, and 320 MHz. The bandwidths for the communication apparatuses to use are not limited thereto. For example, other bandwidths, such as 240 MHz and 4 MHz, may be used.

The non-AP MLD 101 and the AP MLD 102 can implement multi user (MU) communication where signals of a plurality of users are multiplexed by performing orthogonal frequency-division multiple access (OFDMA) communication compliant with the IEEE 802.11be standard. OFDMA is an abbreviation for orthogonal frequency-division multiple access. In OFDMA communication, some of divided frequency bands (resource units [RU]) are allocated to respective stations (STAs) in a non-overlapping manner so that the carriers of the respective STAs are orthogonal to each other. An AP can thus communicate with a plurality of STAs in parallel within a defined bandwidth.

While the non-AP MLD 101 and the AP MLD 102 are described to support the IEEE 802.11be standard, legacy standards prior to the IEEE 802.11be standard may be supported as well. Specifically, the non-AP MLD 101 and the AP MLD 102 may support at least one of the IEEE 802.11/b/g/n/ac/ax standards. Other communication standards, such as Bluetooth^{®}, near field communication (NFC), Ultra Wide Band (UWB), ZigBee, and Multi Band orthogonal frequency division multiplexing (OFDM) Alliance (MBOA), may also be supported in addition to the IEEE 802.11 series standards. UWB is an abbreviation for Ultra Wide Band. NMOA is an abbreviation for Multi Band OFMA Alliance. NFC is an abbreviation for near field communication. UWB includes Wireless Universal Serial Bus (USB), Wireless 1394, and WiNET. A communication standard for wired communication, such as a wired local area network (LAN), may be supported. Specific examples of the AP MLD 102 include, but not limited to, a wireless LAN router and a personal computer (PC). The AP MLD 102 may be an information processing device such as a wireless chip that can perform wireless communication compliant with the IEEE 802.11be standard.

Specific examples of the non-AP MLD 101 include, but not limited to, a camera, a tablet, a smartphone, a PC, a mobile phone, a video camera, and a headset. The non-AP MLD 101 may be an information processing device such as a wireless chip that can perform wireless communication compliant with the IEEE 802.11be standard.

Each communication apparatus can communicate using the bandwidths of 20 MHz, 40 MHz, 80 MHz, 160 MHz, and 320 MHz.

The non-AP MLD 101 and the AP MLD 102 establishes links via a plurality of frequency channels to perform multi-link communication where communication is performed. The IEEE 802.11 series standards define the frequency channels to have a bandwidth of 20 MHz. As employed herein, frequency channels refer to ones defined by the IEEE 802.11 series standards. The IEEE 802.11 series standards define a plurality of frequency channels in each of the 2.4-, 5-, 6-, and 60-GHz frequency bands.

Adjoining frequency channels can be bonded to use a bandwidth of 40 MHz or more on a frequency channel. For example, the AP MLD 102 has the capability of establishing a link via a first frequency channel in the 2.4-GHz band and communicating with the non-AP MLD 101. The non-AP MLD 101 has the capability of establishing a link via a second frequency channel in the 5-GHz band and communicating with the AP MLD 102 in parallel. In such a case, the non-AP MLD 101 performs multi-link communication where the second link via the second frequency channel is maintained in parallel with the link via the first frequency channel. The AP MLD 102 can thus improve the throughput of the communication with the non-AP MLD 101 by establishing links via a plurality of frequency channels with the non-AP MLD 101.

In multi-link communication, a plurality of links of different frequency bands may be established between the communication apparatuses. For example, the non-AP MLD 101 may establish a link in each of the 2.4-, 5- and 6-GHz bands. Alternatively, links may be established via a plurality of different channels included in the same frequency band. For example, with a 6-channel (6-ch) link in the 2.4-GHz band as a first link, a 1-ch link in the 2.4-GHz band may be additionally established as a second link. There may be links of the same frequency band and ones of different frequency bands. For example, the non-AP MLD 101 may establish a 1-ch link in the 2.4-GHz band and a 149-ch link in the 5-GHz band in addition to a 6-ch first link in the 2.4-GHz band. If the non-AP MLD 101 and the AP establish a plurality of connections at different frequencies, a connection can be established with the non-AP MLD 101 in another band in case of congestion in a band. This can prevent a drop in the throughput of the communication with the non-AP MLD 101 and a communication delay.

While the wireless network of Fig. 1 includes an AP MLD and a non-AP MLD, the numbers of AP MLDs and non-AP MLDs and the arrangement thereof are not limited thereto. For example, a non-AP MLD may be added to the wireless network of Fig. 1. The frequency bands of the links to be established here, the number of links, and the frequency widths are not limited in particular.

In performing multi-link communication, the AP MLD 102 and the non-AP MLD 101 transmit and receive data to/from each other via a plurality of links.

The AP MLD 102 and the non-AP MLD 101 may also be capable of multiple-input and multiple-output (MIMO) communication. In such a case, the AP MLD 102 and the non-AP MLD 101 include a plurality of antennas, and either one transmits respective different signals from the antennas using the same frequency channel. The receiving device simultaneously receives all the signals arriving from the plurality of streams using the plurality of antennas, and separates and decodes the signals of the respective streams. By performing MIMO communication, the AP MLD 102 and the non-AP MLD 101 can thus communicate more data in the same time than without MIMO communication. In performing multi-link communication, the AP MLD 102 and the non-AP MLD 101 may perform MIMO communication on some of the links.

### (Configuration of AP MLD and Non-AP MLD)

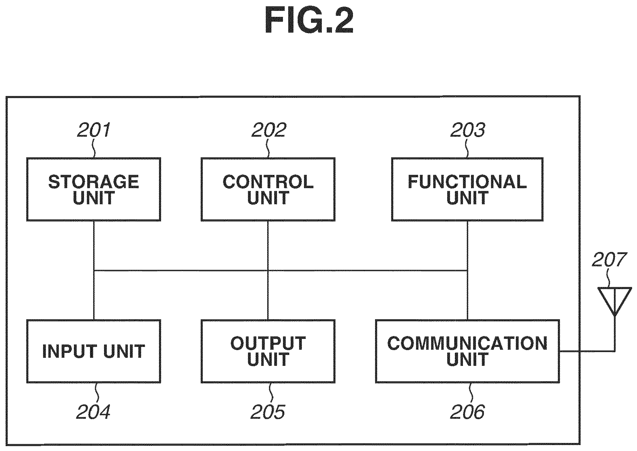

Fig. 2 illustrates a hardware configuration example of the non-AP MLD 101 according to the present exemplary embodiment. The non-AP MLD 101 includes a storage unit 201, a control unit 202, a functional unit 203, an input unit 204, an output unit 205, a communication unit 206, and an antenna 207. The antenna may be more than one.

The storage unit 201 includes one or more memories, such as a read-only memory (ROM) and a random access memory (RAM), and stores computer programs for performing various operations to be described below and various types of information, such as communication parameters for wireless communication. ROM is an abbreviation for read-only memory, and RAM is an abbreviation for random access memory. Aside from memories such as ROM and RAM, the storage unit 201 may use a storage medium such as a flexible disk, a hard disk, an optical disc, a magnetooptical disc, a Compact Disc Read-Only Memory (CD-ROM), a Compact Disc Recordable (CD-R), a magnetic tape, a nonvolatile memory card, and a Digital Versatile Disc (DVD). The storage unit 201 may include a plurality of memories.

The control unit 202 includes one or more processors, such as a central processing unit (CPU) and a micro processing unit (MPU), for example, and controls the entire non-AP MLD 101 by executing the computer programs stored in the storage unit 201. The control unit 202 may control the entire non-AP MLD 101 through cooperation of the computer programs stored in the storage unit 201 and an operating system (OS). The control unit 202 generates data and signals (wireless frames) to be transmitted during communication with other communication apparatuses.

CPU is an abbreviation for central processing unit, and MPU for micro processing unit. The control unit 202 may include a plurality of processors like a multicore processor, and the entire non-AP MLD 101 may be controlled by the plurality of processors.

The control unit 202 controls the functional unit 203 to perform predetermined processing, such as wireless communication, imaging, printing, and projection. The functional unit 203 is hardware component for the non-AP MLD 101 to perform predetermined processing.

The input unit 204 accepts various operations from the user. The output unit 205 makes various types of output to the user via a monitor screen and a speaker. Examples of the output by the output unit 205 may include display on the monitor screen, an audio output from the speaker, and a vibration output. The input unit 204 and the output unit 205 may be both implemented by a single module like a touchscreen. The input unit 204 and the output unit 205 each may be either integrated with or separate from the non-AP MLD 101.

The communication unit 206 controls wireless communication compliant with the IEEE 802.11be standard. In addition to the IEEE 802.11be standard, the communication unit 206 may control wireless communication compliant with other IEEE 802.11 series standards and/or wired communication, such as a wired LAN. The communication unit 206 controls the antenna 207 to transmit and receive signals for wireless communication generated by the control unit 202.

If the non-AP MLD 101 supports the NFC standard and/or the Bluetooth^{®} standard in addition to the IEEE 802.11be standard, the communication unit 206 may control wireless communication compliant with such communication standards. If the non-AP MLD 101 can perform wireless communication compliant with a plurality of communication standards, the non-AP MLD 101 may separately include communication units and antennas corresponding to the respective communication standards. The non-AP MLD 101 communicates data, such as image data, document data, and video data, with the non-AP MLD 101 via the communication unit 206. The antenna 207 may be configured as a separate member from the communication unit 206, or integrated into a single module with the communication unit 206.

The antenna 207 is capable of communication in the 2.4-, 5-, and 6-GHz bands. In the present exemplary embodiment, the non-AP MLD 101 is described to include a single antenna. However, the non-AP MLD 101 may include three antennas. The non-AP MLD 101 may include different antennas for respective frequency bands. If the non-AP MLD 101 includes a plurality of antennas, communication units 206 corresponding to the respective antennas may be included.

The AP MLD 102 has a hardware configuration similar to that of the non-AP MLD 101.

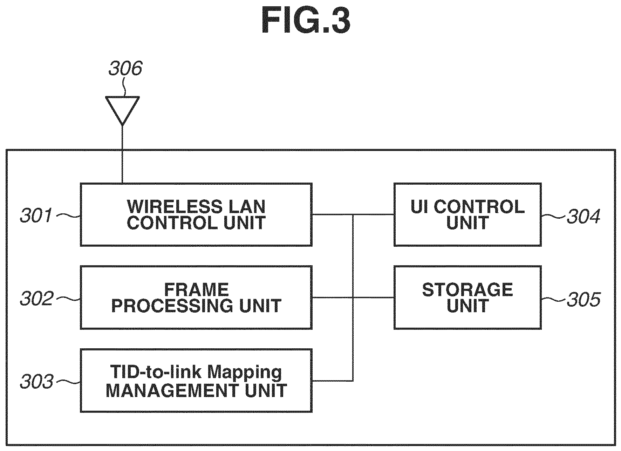

Fig. 3 illustrates a block diagram of a functional configuration of the non-AP MLD 101 according to the present exemplary embodiment. The AP MLD 102 has a similar configuration. The non-AP MLD 101 includes a single wireless LAN control unit 301. The number of wireless LAN control units is not limited to one, and may be two, three, or more. The non-AP MLD 101 further includes a frame processing unit 302, a traffic identifier (TID)-To-Link Mapping management unit 303, a user interface (UI) control unit 304, a storage unit 305, and a wireless antenna 306.

The wireless LAN control unit 301 includes an antenna and circuit for transmitting and receiving wireless signals to/from other wireless LAN devices, and a program for controlling the antenna and circuit. The wireless LAN control unit 301 controls wireless LAN communication based on frames generated by the frame generation unit 302 in compliance with the IEEE 802.11 standard series.

The frame processing unit 302 processes wireless control frames that the wireless LAN control unit 301 transmits and receives. The details of wireless control for the frame processing unit 302 to generate and analyze may be limited by settings stored in the storage unit 305. The details of the wireless control may be modified by user settings from the UI control unit 304. Information about the generated frames is passed to the wireless LAN control unit 301 and transmitted to the communication partner. Information about frames received by the wireless LAN connection unit 301 is passed to and analyzed by the frame processing unit 302.

The TID-To-Link Mapping management unit 303 manages which TID is linked to which link. TID is an abbreviation for traffic identifier. A TID is an identifier indicating the degree of priority of data used for Quality of Service (QoS) purposes. There are eight types of TIDs. The eight types include a TID for transmitting a video data or voice data, for example. All the eight types of TIDs need to be assigned to at least one link.

The UI control unit 304 includes UI-related hardware such as a touchscreen or a button for accepting an operation made on the non-AP MLD by a not-illustrated user of the non-AP MLD, and a program for controlling such pieces of hardware. The UI control unit 304 also has a function of presenting information to the user, such as displaying an image and outputting sound.

The storage unit 305 is a storage device that can include a ROM and a RAM for storing programs and data for the non-AP MLD to operate with.

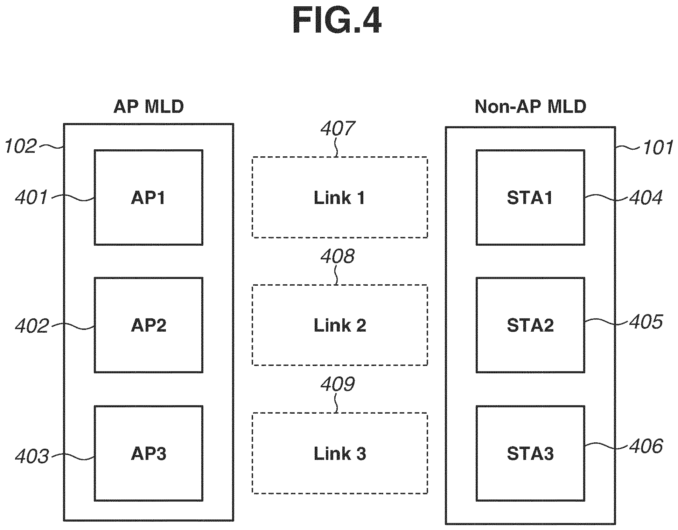

Fig. 4 illustrates a configuration of the AP MLD and the non-AP MLD performing multi-link communication.

A communication apparatus that operates in the multi-link operation is referred to as a multi link device (MLD). An MLD includes a plurality of STAs and/or APs (access points) linked with respective links. An MLD having an AP function is referred to as an AP MLD. An MLD not having an AP function is referred to as a non-AP MLD.

In Fig. 4, an AP1 401 and an STA1 404 establish link 1 407 via a first frequency channel. Similarly, an AP2 408 and an STA2 405 establish link 2 408 via a second frequency channel. An AP3 403 and an STA3 406 establish link 3 409 via a third frequency channel.

As employed herein, the AP MLD and the non-AP MLD establish connections via frequency channels in sub-GHz, 2.4-GHz, 3.6-GHz, 4.9- and 5-GHz, 60-GHz, and 6-GHz bands. The AP MLD and the non-AP MLD maintain a connection on a second link via the second frequency channel in parallel with a connection on a first link via the first frequency channel. The AP MLD and the non-AP MLD may establish a plurality of connections via different frequency channels in the same frequency band instead of connections in different frequency bands.

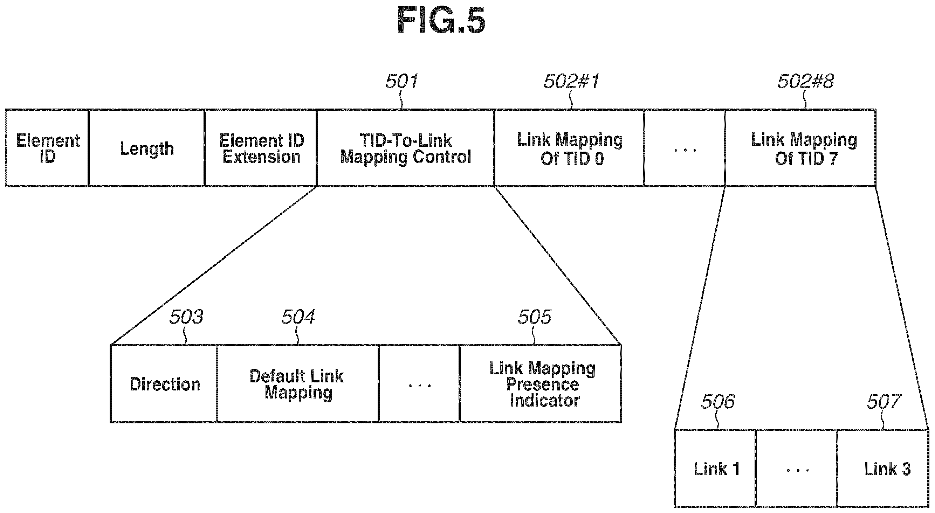

Fig. 5 illustrates an example of the frame format of a TID-To Link Mapping element. In the present exemplary embodiment, the element illustrated in Fig. 5 is named TID-To Link Mapping element. However, this is not restrictive, and other names may be used. This element is included in a management frame or action frame such as an Association Request frame.

The TID-To Link Mapping element mainly includes a TID-To Link Mapping Control 501 and Link Mapping of TIDs 502.

The TID-To Link Mapping Control 501 includes a Direction 503, a Default Link Mapping 504, and a Link Mapping Presence Indicator 505.

The Direction 503 is a field indicating whether the frame including this element is in an uploading (UL) direction or a downloading (DL) direction.

The Default Link Mapping 504 is a field indicating that TIDs are assigned in a default mode. As employed herein, the default mode refers to a mode where all TIDs are assigned to all links.

The Link Mapping Presence Indicator 505 is a field indicating whether this element includes the Link Mapping of TIDs 502 to follow the field 501.

If this element does not include the Link Mapping of TIDs 502 to follow the field 501, this Link Mapping Presence Indicator field 505 does not need to be included.

Link Mapping of TIDs 502#1 to 502#8 are fields indicating which links the TIDs are assigned to. As many Link Mapping of TID's as the number of TIDs are generated. Specifically, since there are eight types of TIDs as described above, there can be eight Link Mapping of TIDs 502. A specific description will be provided by using the Link Mapping of TID 502#8. Suppose, for example, that connections are established on links 1, 2, and 3, and TID 7 is assigned to links 1 and 3. In such a case, the Link Mapping of TID 502#8 includes a value of 1 in a Link 1 506 and a Link 3 507, and a value of 0 in the other subfields.

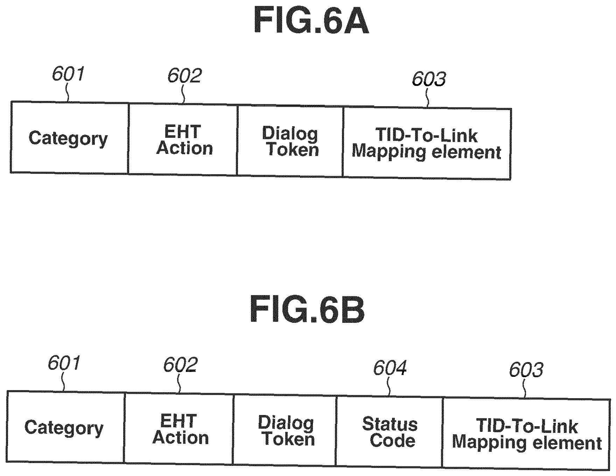

Figs. 6A and 6B illustrate examples of a TID-To Link Mapping Request frame which is an action claim and a TID-To Link Mapping Response frame.

Initially, Fig. 6A illustrates a configuration example of the TID-To Mapping Request frame.

The TID-To Link Mapping Request frame includes a Category 601, an EHT Action 602, a Dialog Token, and a TID-To Link Mapping element 603.

The Category 601 is a field indicating that the TID-To Link Mapping Request frame is an action frame.

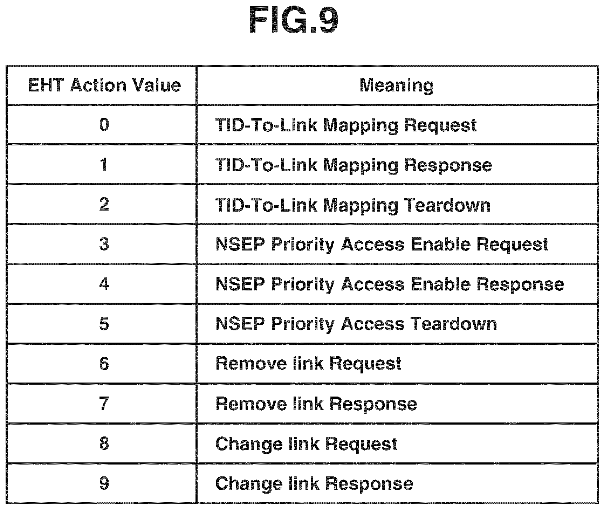

The EHT Action 602 stores the type of action frame. Specifically, the EHT Action 602 stores an EHT Action Value illustrated in the table of Fig. 9. That the action frame is a TID-To Link Mapping Request frame is indicated by the field 602 storing " 1" as the EHT Action Value.

The TID-To Link Mapping element 603 stores the element illustrated in Fig. 5. While in the present exemplary embodiment the TID-To Link Mapping element of Fig. 5 is described to be stored, this is not restrictive. For example, inclusion of at least part of the information about the TID-To Link Mapping element illustrated in Fig. 5 is sufficient.

Next, Fig. 6B illustrates a configuration example of the TID-To Link Mapping Response frame.

This frame includes a Category 601, an EHT Action 602, a Dialog Token, a Status Code 604, and a TID-To Link Mapping element 603.

The Category 601 is a field indicating that the TID-To Link Mapping Request frame is an action frame.

The EHT Action 602 stores the type of action frame. Specifically, the EHT Action 602 stores an EHT Action Value illustrated in the table of Fig. 9. That this frame is a TID-To Link Mapping Response frame is indicated by the field 602 storing "2" as the EHT Action Value.

The Status Code 604 stores a response to the TID reassignment request indicated by the TID-To Link Mapping Request. For example, if TIDs are successfully assigned, the Status Code 604 stores information indicating "SUCCESS".

The TID-To Link Mapping element 603 stores the element illustrated in Fig. 5. While in the present exemplary embodiment the TID-To-Link Mapping element of Fig. 5 is described to be stored, this is not restrictive. For example, inclusion of at least part of the information about the TID-To-Link Mapping element illustrated in Fig. 5 is sufficient. The element 603 of the TID-To-Link Mapping Response stores the result of TID reassignment determined based on the TID reassignment request indicated by the TID-To-Link Mapping Request.

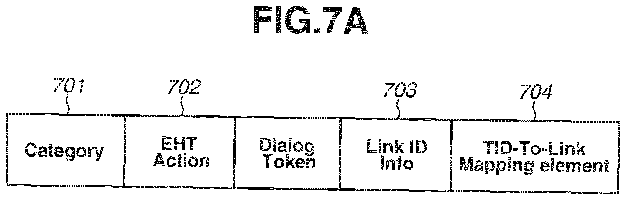

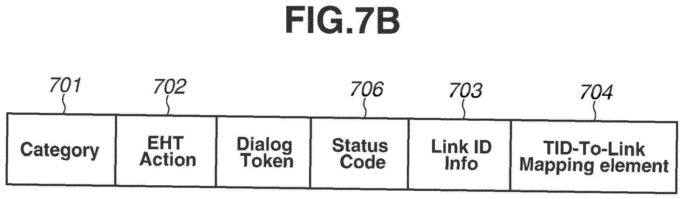

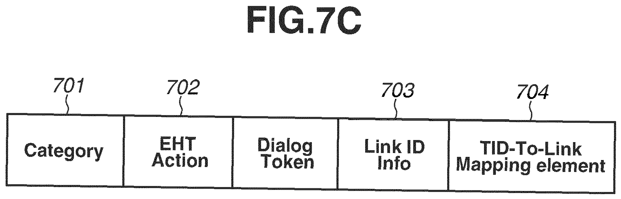

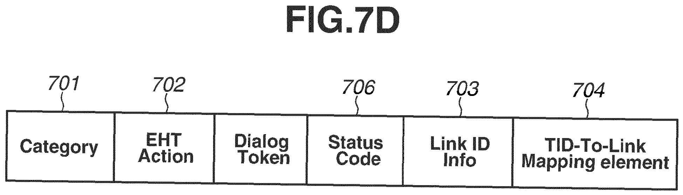

Figs. 7A, 7B, 7C, and 7D illustrate examples of a Remove Link Request frame which is an action claim, a Remove Link Response frame, a Change link Request frame, and a Change link Response.

Fig. 7A illustrates a configuration example of the Remove Link Request frame.

The Remove Link Request frame includes a Category 701, an EHT Action 702, a Dialog Token, a Link ID Info 703, and a TID-To-Link Mapping element 704.

The Category 701 is a field indicating that the Remove Link Request frame is a Protected EHT action frame.

The EHT Action 702 stores the type of action frame. Specifically, the EHT Action 702 stores an EHT Action value illustrated in the table of Fig. 9. That this frame is a Remove Link Request frame is indicated by the field 702 storing "6" as the EHT Action Value.

The Link ID Info 703 is a field to be used to disconnect a link. This field 703 specifies the link to be added. For example, consider the case of disconnecting the link 2 when the AP MLD 101 and the non-AP MLD 102 are connected via the link 1. In such a case, the link 2 can be disconnected if the Link ID Info 703 specifies the link 2, a request to disconnect the link 2 is issued, and the request is accepted.

The Link ID Info 703 may store a plurality of pieces of link information. The Link ID Info 703 may be provided link by link. For example, in the case of disconnecting the links 1, 2, and 3, there may be provided a Link ID Info 703#1 for the link 1, a Link ID Info 703#2 for the link 2, and a Link ID Info 703#3 for the link 3. The Link ID Info 703 may include a basic service set identifier (BSS ID) given to the disconnection-requested link, a media access control (MAC) address of the transmission source or destination belonging to the Link ID, and/or an MLD MAC Address.

A Multi-Link element may be used instead of the Link ID Info field.

The TID-To-Link Mapping element 704 stores the element illustrated in Fig. 5. While in the present exemplary embodiment the TID-To-Link Mapping element of Fig. 5 is described to be stored, this is not restrictive. For example, inclusion of at least part of the information about the TID-To-Link Mapping element illustrated in Fig. 5 is sufficient.

Fig. 7B illustrates a configuration example of the Remove Link Response frame.

That this frame is a Remove Link Response frame is indicated by the field 702 storing an EHT Action Value of "7" illustrated in the table of Fig. 9 as its EHT Action Value.

The fields 701 and 702 are similar to those of the foregoing Remove Link Request frame. A description thereof will thus be omitted.

A Status Code 706 stores a response to the request indicated by the Remove Link Request. For example, if the link is successfully disconnected and requested TIDs are successfully assigned, the Status Code 706 indicates "SUCCESS". For example, if the request to disconnect the link is accepted but the requested TIDs are unable to be assigned, in other words, the TID assignment is failed, the Status Code 706 stores information indicating that.

The TID-To-Link Mapping element 704 of the Remove Link Response stores the result of TID reassignment determined based on the TID reassignment request indicated by the Remove Link Request.

Fig. 7C illustrates a configuration example of the Change link Request frame.

That this frame is a Change link Request frame is indicated by the field 702 storing an EHT Actin Value of "8" illustrated in the table of Fig. 9 as its EHT Action Value.

The fields 701 and 702 are similar to those of the foregoing Remove Link Request frame. A description thereof will thus be omitted.

A Link ID Info 703 of the Change link Request frame can be given all Link IDs after a link change. For example, consider the case of changing a second link to a third link while maintaining a first link when the AP MLD 101 and the non-AP MLD 102 are connected via the first link and the second link. In such a case, the Link ID Info 703 stores information about the links 1 and 3 as a list of links after the change. The Link ID Info 703 may thus store a plurality of pieces of link information like the link 1 and the link 3.

Alternatively, fields may be provided link by link, like a Link ID Info 703#1 for the link 1 and a Link ID Info 703#3 for the link 3.

The Link ID Info 703 may store only Link IDs to be changed. For example, in the case of changing the second link to the third link while maintaining the first link when the AP MLD 101 and the non-AP MLD 102 are connected via the first link and the second link, the second link is disconnected and the third link is added. The information about the second and third links that are the links to be changed is thus stored in the Link ID Info 703.

Fig. 7D illustrates a configuration example of the Change link Response frame.

That this frame is a Change link Response frame is indicated by the field 702 storing an EHT Action Value of "9" illustrated in the table of Fig. 9 as its EHT Action Value.

The fields 701 and 702 are similar to those of the foregoing Remove Link Request frame. A description thereof will thus be omitted.

A Status Code of the Change link Response frame can store information similar to that of the Status Code 706 of the Link Remove Response frame.

A TID-To-Link Mapping element 704 of the Change Link Response stores a result of TID reassignment determined based on the TID reassignment request indicated by the Change Link Request.

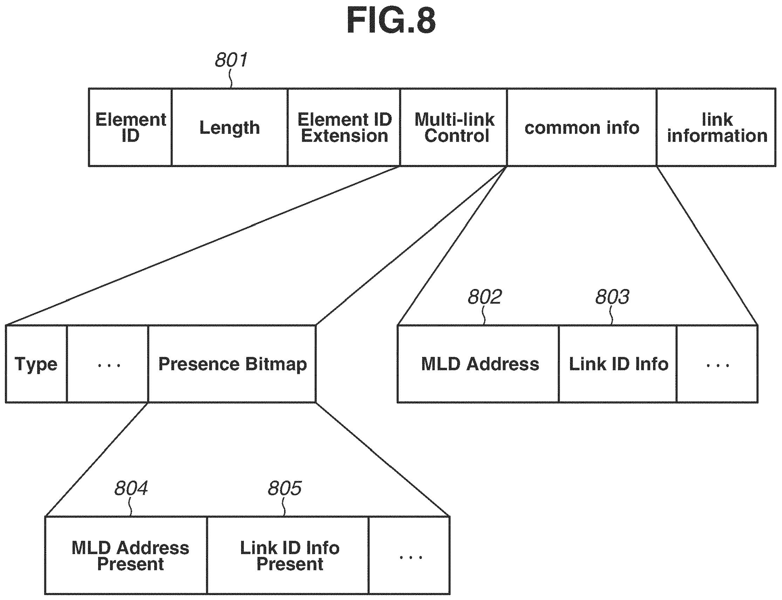

A Multi-Link element illustrated in Fig. 8 may be stored instead of the Link ID Info 703.

The Multi-Link element includes an Element, a Length 801, an Element ID Extension, a Multi-Link Control, a Common Info, and a Link Information.

The Length 801 is a field indicating a field length.

The Common Info includes an MLD Removeress 802 and a Link ID Info 803. The MLD Removeress 802 stores a device MLD Removeress that transmits this frame.

The Link ID Info 803 has a configuration similar to that of the Link ID Info 703. A description thereof will thus be omitted.

If the Link ID Info 803 is provided link by link as described above, the presence of a plurality of Link ID Info's 803 can be figured out from the field length of the Length 810.

An MLD address Present 804 is a field indicating whether the MLD Removeress 802 to be included in the Common Info following the Multi-link Control is included.

A Link ID Info Present 805 is a field indicating whether the Link ID Info 803 to be included in the Common Info following the Multi-link Control is included.

The Multi-link element itself may be provided link by link, and the plurality of Multi-link elements may be included in a frame.

In the present exemplary embodiment, the field 702 is described to store a value of "6" to "9" as the EHT Action Value. However, this is not restrictive, and other values may be stored.

Using the Remove link Request frame according to the present exemplary embodiment enables link disconnection and a TID reassignment request. Moreover, transmitting the Remove link Request frame to the partner apparatus prevents the occurrence of an unassigned TID due to the disconnection of the link, and communication can be continued via the remaining link(s) after the disconnection of the link.

### <First Exemplary Embodiment>

The present exemplary embodiment describes an example of reassigning TIDs to the remaining link(s) before disconnection of a link to prevent the occurrence of an unassigned TID due to the disconnection of the link.

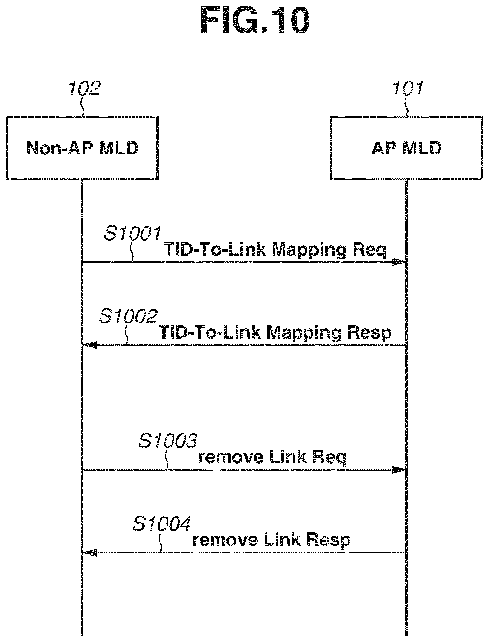

Fig. 10 illustrates a sequence where a request to change the TID assignment is issued using a TID-To-Link Mapping Request frame before transmission of a Remove link Request frame for requesting disconnection. Here, the AP MLD 101 and the non-AP MLD 102 are connected via a first link and a second link, and the TIDs are set to both the links. The TID reassignment sequence in disconnecting a link in the state where the AP MLD 101 and the non-AP MLD 102 are connected via the first and second links will now be described.

In step S1001, the non-AP MLD 102 requesting a change in the TID assignment transmits a TID-To-Link Mapping Request frame to the AP MLD 101. This TID-To-Link Mapping Request frame includes information for requesting TID assignment. The information for requesting TID assignment is stored in the TID-To-Link Mapping element 603.

With the TID-To-Link Mapping Request frame transmitted in step S1001, the AP MLD 101 receives the frame and determines where the desired TID assignment is acceptable. The AP MLD 101 stores the determined information in the Status Code 604 illustrated in Fig. 6B, and transmits the TID-To-Link Mapping Response frame storing the information to the non-AP MLD 102.

The non-AP MLD 102 checks whether the requested assignment in the Status Code in the TID-To-Link Mapping Response frame received in step S1002 is successful. Having checked that the requested TID reassignment in the Status Code is successful, the non-AP MLD 102 requests link disconnection by transmitting a Remove link Request to the partner apparatus.

According to this sequence, TID reassignment is performed before link disconnection. This can prevent the occurrence of an unassigned TID due to the disconnection of the link, and communication can be continued via the remaining link(s) after the disconnection of the link.

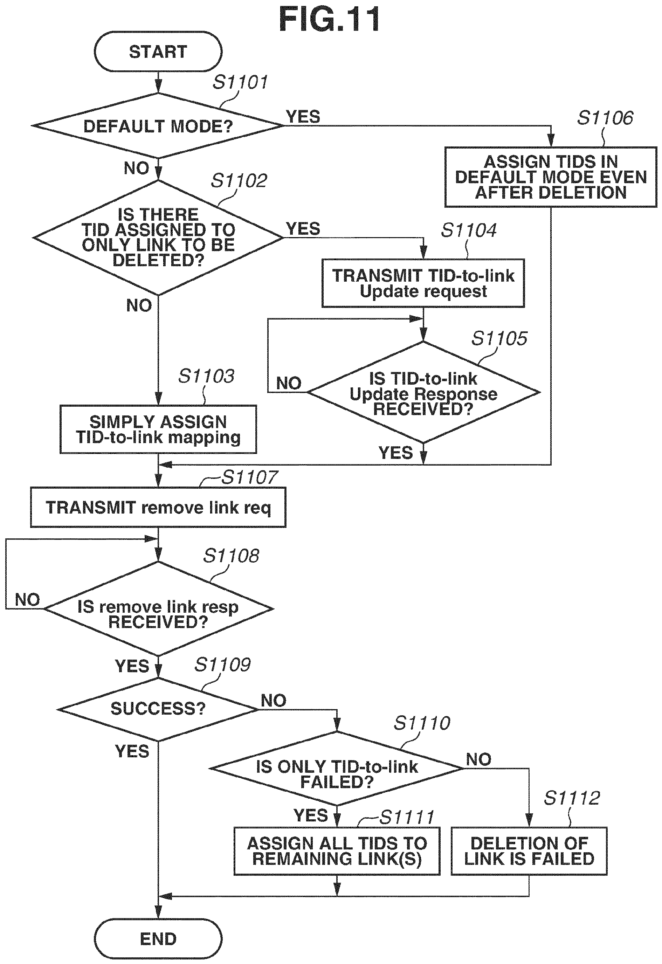

With reference to Fig. 11, a processing procedure for reassigning TIDs in disconnecting a link by the control unit 202 of the AP MLD 101 or the non-AP MLD 102 executing a program stored in the storage unit 201 will be described.

This flowchart is started in response to the user's instruction to add a link. The user operation is not restrictive, and an application may issue the instruction to add a link. This flowchart may be started based on a change in the radio environment.

In step S1101, the control unit 202 determines whether the MLD is running in the default mode. The default mode refers to a mode where all the TIDs are assigned to all links. Specifically, the control unit 202 determines whether the MLD is running in the default mode by referring to the Default Link Mapping 504 in the TID-To-Link Mapping element of Fig. 5.

In step S1101, if it is determined that the MLD is running in the default mode, then in step S1106, the control unit 202 transmits a Remove link Request without the TID-To-Link Mapping element. When the MLD is running in the default mode, TID assignment does not need to be taken into consideration in disconnecting a link, since all the TIDs are assigned to all the links.

In step S1101, if it is determined that the MLD is not running in the default mode, then in step S1102, the control unit 202 determines where there is a TID assigned to only the link to be disconnected.

In step S1102, if it is determined that there is a TID assigned to only the link to be disconnected, then in step S1104, the control unit 202 transmits a TID-To-Link Mapping Request to the partner apparatus. In step S1105, the control unit 202 determines whether a TID-To-Link Mapping Response frame that is a response frame to the TID-To-Link Mapping Request transmitted in step S1102 is received. In step S1105, if it is determined that the TID-To-Link Mapping Response frame is received, then in step S1107, the control unit 202 transmits a Remove link Request to the partner apparatus. In step S1107, the control unit 202 stores request information for disconnecting the connection in the Remove link Request.

In step S1102, if it is determined that there is no TID assigned to only the link to be disconnected, then in step S1103, the control unit 202 does not store the TID-To-Link Mapping. The control unit 202 transmits the Remove link Request to the partner apparatus.

In step S1108, the control unit 202 determines whether a Remove link Response that is a response frame to the Remove link Request transmitted in step S1107 is received. In step S1108, if it is determined that the Remove link Response is received, then in step S1109, the control unit 202 determines whether the TID assignment requested by the Remove link Request is successful. Specifically, the control unit 202 determines whether the Status Code in the received Remove link Response frame is Success.

In step S1109, if it is determined that the TID assignment requested by the Remove link Request is successful, the flowchart ends.

In step S1109, if it is determined that the TID assignment requested by the Remove link Request is not successful, then in step S1110, the control unit 202 determines whether only the TID assignment is failed. In step S1110, if it is determined that only the TID assignment is failed, then in step S1111, the control unit 202 assigns all the types of TIDs to the remaining link(s). The flowchart ends. In step S1110, if it is determined that a failure lies in other than the TID assignment, then in step S1112, the control unit 202 does not disconnect the link. The flowchart ends.

In the present exemplary embodiment, the Remove link request is described to be transmitted. However, this is not restrictive. Management frames, such as a Disassociation frame and a Deauthentication frame, may be transmitted instead of the Remove link request.

In the present exemplary embodiment, a request to reassign TIDs to the link(s) that remain(s) after the disconnection of a link is issued by transmitting a TID-To-Link Mapping Request before the transmission of a Remove link Request that is the link disconnection request. Since the TIDs are reassigned by issuing the TID reassignment request before the disconnection of the link, communication can be continued via the remaining link(s) after the disconnection of the link even if there is a TID assigned to only the link to be disconnected.

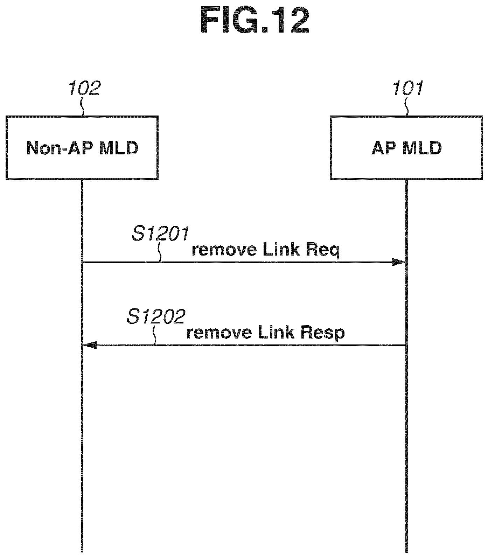

Fig. 12 illustrates a sequence diagram for preforming link disconnection and TID assignment processing using a Remove link Request frame and a Remove link Response frame. Here, the AP MLD 101 and the non-AP MLD 102 are connected via a first link and a second link, and TIDs are set to both the links. A TID reassignment sequence in disconnecting a link in the state where the AP MLD 101 and the non-AP MLD 102 are connected via the first and second links will now be described.

In step S1201, the non-AP MLD 102 requesting the disconnection of the link transmits a Remove link Request frame. This Remove link Request frame includes information for requesting the disconnection of the link and information for requesting TID assignment. Referring to Fig. 7A, the information for requesting the disconnection of the link is stored in the Link ID Info 703. The information for requesting the TID assignment is stored in the TID-To-Link Mapping element 704.

With the Remove link Request frame transmitted in step S1201, the AP MLD 101 receives the frame and determines whether the link disconnection and TID assignment requested by the Remove link Request frame are acceptable. In step S1202, the AP MLD 101 stores the determined information into the Status Code 706 illustrated in Fig. 7B, and transmits the Remove link Response frame storing the information to the non-AP MLD 102.

According to this sequence, the link disconnection request and the TID assignment request can be issued using the Remove link Request frame. Reassigning TIDs before the disconnection of the link can prevent the occurrence of an unassigned TID due to the disconnection, and communication can be continued via the remaining link after the disconnection of the link.

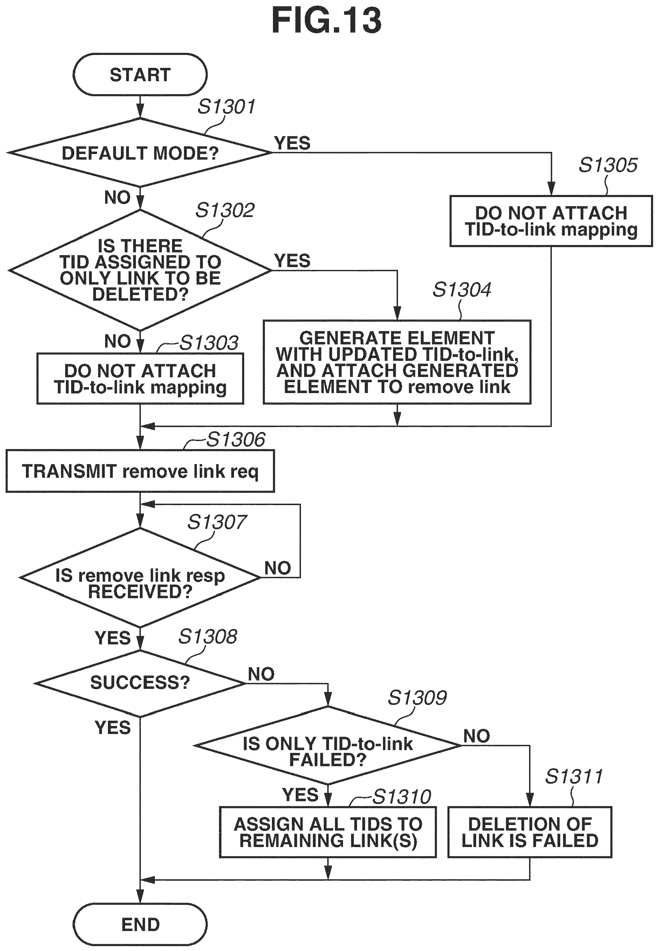

With reference to Fig. 13, a processing procedure for reassigning TIDs in disconnecting a link by the control unit 202 of the AP MLD 101 or the non-AP MLD 102 executing a program stored in the storage unit 201 will be described.

This flowchart is started in response to the user's instruction to add a link. The user operation is not restrictive, and an application may issue the instruction to add a link. This flowchart may be started based on a change in the radio environment.

In step S 1301, the control unit 202 determines whether the MLD is running in the default mode. The default mode refers to the mode where all the TIDs are assigned to all links. Specifically, the control unit 202 determines whether the MLD is running in the default mode by referring to the Default Link Mapping 504 in the TID-To-Link Mapping element of Fig. 5.

In step S1301, if it is determined that the MLD is running in the default mode, then in n step S1305, the control unit 202 does not attach the TID-To-Link Mapping element 704. In step S1306, the control unit 202 transmits a Remove link Request. In a case where the MLD is running in the default mode, TID assignment does not need to be taken into consideration in disconnecting a link, since all the TIDs are assigned to all the links.

In step S1301, if it is determined that the MLD is not running in the default mode, then in step S1302, the control unit 202 determines where there is a TID assigned to only the link to be disconnected.

In step S1302, if it is determined that there is a TID assigned to only the link to be disconnected, then in step S1304, the control unit 202 stores information for assigning the TID assigned to only the link to be disconnected into the TID-To-Link Mapping element 704. In step S1306, the control unit 202 transmits the Remove link Request storing the information to the partner apparatus. In step S1302, if it is determined that there is no TID assigned to only the link to be disconnected, then in step S1303, the control unit 202 does not store the TID-To-Link Mapping Element 704. The control unit 202 transmits the Remove link Request to the partner apparatus.

In the present exemplary embodiment, the Remove link request is described to be transmitted. However, this is not restrictive. Management frames, such as a Disassociation frame and a Deauthentication frame, may be transmitted instead of the Remove link request.

In step S1307, the control unit 202 determines whether a Remove link Response that is a response frame to the Remove link Request transmitted in step S1306 is received. In step S1307, if it is determined that the Remove link Response is received, then in step S1308, the control unit 202 determines whether the TID assignment requested by the Remove link Request is successful. Specifically, the control unit 202 determines whether the Status Code in the received Remove link Response frame is Success.

In step S1308, if it is determined that the TID assignment requested by the Remove link Request is successful, the flowchart ends.

In step S1308, if it is determined that the TID assignment requested by the Remove link Request is not successful, then in step S1309, the control unit 202 determines whether only the TID assignment is failed. In step S1309, if it is determined that only the TID assignment is failed, then in step S1310, the control unit 202 assigns all the types of TIDs to the remaining link(s). The flowchart ends. In step S1309, if it is determined that a failure lies in other than the TID assignment, then in step S1311, the control unit 202 does not disconnect the link. The flowchart ends.

In the present exemplary embodiment, the link disconnection request and the TID reassignment request for the remaining link(s) are described to be performed using the same frame. Simultaneously performing the link disconnection and the TID reassignment can prevent the occurrence of an unassigned TID due to the disconnection, and communication can be continued via the remaining link(s) after the disconnection of the link.

### <Second Exemplary Embodiment>

In the first exemplary embodiment, the TID reassignment to the remaining link(s) is described to be performed before the disconnection of a link. The present exemplary embodiment describes a case where the TID reassignment to the remaining link(s) is not requested when a link disconnection request is received.

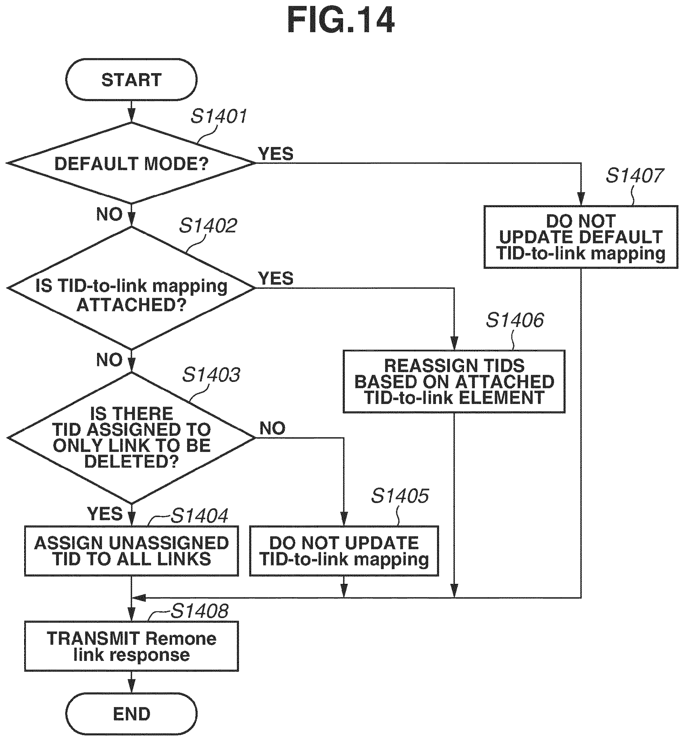

With reference to Fig. 14, a processing procedure for reassigning TIDs in response to reception of a link disconnection request by the control unit 202 of the AP MLD 101 or the non-AP MLD 102 executing a program stored in the storage unit 201 will be described.

This flowchart is started in response to the reception of a Remove link Request.

In step S1401, the control unit 202 determines whether the MLD is running in the default mode. The default mode refers to the mode where all the TIDs are assigned to all links. Specifically, the control unit 202 determines whether the MLD is running in the default mode by referring to the Default Link Mapping 504 in the TID-To-Link Mapping element of Fig. 5.

If, in step S 1401, it is determined that the MLD is running in the default mode, all the TIDs are assigned to all the links. TID assignment therefore does not need to be taken into consideration in disconnecting a link. In step S1407, the control unit 202 does not update the TID-To-Link Mapping element 704. In step S1408, the control unit 202 stores the information of the unupdated TID-To-Link Mapping element 704 into a Remove link Request, and perform transmission to the partner apparatus. The flowchart ends.

In step S 140 1, if it is determined that the MLD is not running in the default mode, then in step S1402, the control unit 202 determines whether the TID-To-Link Mapping element 704 is attached to the received Remove link Request. The TID-To-Link Mapping element 704 stores information about the TID reassignment request.

In step S1402, if it is determined that the TID-To-Link Mapping element 704 is attached, then in step S1406, the control unit 202 reassigns TIDs based on the request indicated by the TID-To-Link Mapping element 704.

The control unit 202 stores the result of the reassignment performed in step S1406 into the TID-To-Link Mapping element 704, and transmits the updated information as included in the Remove link Response. The flowchart ends.

In step S1402, if it is determined that the TID-To-Link Mapping element 704 is not attached, then in step S1403, the control unit 202 determines whether there is a TID assigned to only the link to be disconnected. If it is determined that there is a TID assigned to only the link to be disconnected, then in step S1404, the control unit 202 assign the TID to all the remaining link(s). The flowchart ends. In step S1403, if it is determined that there is no TID assigned to only the link to be disconnected, then in step S1405, the control unit 202 does not update the information of the received TID-To-Link Mapping element 704. In step S1408, the control unit 202 stores the information into a Remove link Request, and transmits the Remove link Request to the partner apparatus. The flowchart ends.

In the present exemplary embodiment, the Remove link request is described to be transmitted. However, this is not restrictive. Management frames such as a Disassociation frame and a Deauthentication frame may be transmitted instead of the Remove link request.

In the present exemplary embodiment, the TID is described to be assigned to the remaining link(s) in step S1403. However, not just the TID assigned to only the link to be disconnected but all the TIDs may be assigned to the remaining link(s). In other words, the TIDs may be assigned in the default mode.

According to the present exemplary embodiment, even if the TID reassignment to the remaining link(s) is not requested in response to reception of a link disconnection request and there is a TID assigned to only the link to be disconnected, the TID can be reassigned to the remaining link(s). This can prevent the occurrence of an unassigned TID due to the disconnection, and communication can be continued via the remaining link(s) after the disconnection of the link.

A recording medium recording software program code for implementing the foregoing functions may be supplied to a system or an apparatus, and a computer (CPU or MPU) of the system or apparatus may read the program code stored in the recording medium and execute the program code. In such a case, the program code itself read from the storage medium implements the functions of the foregoing exemplary embodiments, and the storage medium storing the program code constitutes the foregoing apparatuses.

Examples of the storage medium for supplying the program code include a flexible disk, a hard disk, an optical disc, a magnetooptical disc, a CD-ROM, a CD-R, a magnetic tape, a nonvolatile memory card, a ROM, and a DVD.

Not just the computer executes the read program code to implement the foregoing functions, but an OS running on the computer may perform part or all of the actual processing to implement the foregoing functions based on the instructions of the program code. OS is an abbreviation for operating system.

Moreover, the program code read from the storage medium may be written to a memory on a function extension board inserted into the computer or a function extension unit connected to the computer. A CPU of the function extension board or the function extension unit may then perform part or all of the actual processing to implement the foregoing functions based on the instructions of the program code.

The present invention can also be implemented by processing for supplying a program for implementing one or more functions of the foregoing exemplary embodiments to a system or an apparatus via a network or a storage medium, and reading and executing the program by one or more processors in a computer of the system or apparatus. A circuit for implementing one or more functions (such as an application-specific integrated circuit [ASIC]) can also be used for implementation.

The present invention is not limited to the foregoing exemplary embodiments, and various changes and modifications can be made without departing from the spirit or scope of the present invention. The following claims are therefore attached to make the scope of the present invention public.

This application claims the benefit of priority based on Japanese Patent Application No. 2021-146411, filed on September 8, 2021, the entire contents of which are incorporated herein by reference.

## Claims

1. A communication apparatus comprising:
an establishment unit configured to establish connections with another communication apparatus via a first link and a second link;
a setting unit configured to set traffic identifiers (TIDs) to the first link and the second link; and
an assignment unit configured to, in disconnecting the connection via the second link in a state where the communication apparatus and the another communication apparatus are connected via the first link and the second link by the establishment unit, perform TID assignment to the first link based on information about the TID set to the first link and information about the TID set to the second link by the setting unit.

2. The communication apparatus according to Claim 1, further comprising a transmission unit configured to, in disconnecting the connection via the second link in the state where the communication apparatus and the another communication apparatus are connected via the first link and the second link, transmit a frame including information for determining the TID for the first link.

3. The communication apparatus according to Claim 1 or 2, wherein the assignment unit is configured to, in a case where there is a TID set to only the second link by the setting unit in disconnecting the connection via the second link in the state where the communication apparatus and the another communication apparatus are connected via the first link and the second link, assign the TID to the first link.

4. The communication apparatus according to any one of Claims 1 to 3, wherein the assignment unit is configured to, in a case where there is a TID set to only the second link by the setting unit in disconnecting the connection via the second link in the state where the communication apparatus and the another communication apparatus are connected via the first link and the second link, assign all types of TIDs to the first link.

5. The communication apparatus according to any one of Claims 1 to 4, wherein the communication apparatus is configured to perform the TID assignment to the first link in response to reception of a disconnection request to disconnect the connection via the second link from the another communication apparatus.

6. The communication apparatus according to Claim 5, wherein information for disconnecting the second link and information about a TID to be assigned to the first link are stored in the frame.

7. The communication apparatus according to Claim 6, wherein the information about the TID to be assigned to the first link by the assignment unit is stored in a TID-To-Link Mapping element of the frame.

8. The communication apparatus according to any one of Claims 1 to 7, wherein the frame is a management frame or action frame compliant with an Institute of Electrical and Electronics Engineers (IEEE) 802.11 standard.

9. A communication method for a communication apparatus, comprising:
establishing connections with another communication apparatus via a first link and a second link;
setting TIDs to the first link and the second link; and
performing, in disconnecting the connection via the second link in a state where the communication apparatus and the another communication apparatus are connected via the first link and the second link through the establishing, TID assignment to the first link based on information about the TID set to the first link and information about the TID set to the second link through the setting.

10. A program for causing a computer to function as the units of the communication apparatus according to any one of Claims 1 to 8.
